(19) Europäisches Patentamt
European Patent Office
Office européen des brevets

(11) **EP 4 468 810 A1**

(12) **EUROPEAN PATENT APPLICATION**
published in accordance with Art. 153(4) EPC

(43) Date of publication:
**27.11.2024 Bulletin 2024/48**

(21) Application number: **23743438.6**

(22) Date of filing: **17.01.2023**

(51) International Patent Classification (IPC):
**H04W 72/23** (2023.01)　　**H04W 72/21** (2023.01)
**H04W 72/04** (2023.01)　　**H04B 7/06** (2006.01)
**H04B 7/0413** (2017.01)　　**H04B 7/0404** (2017.01)

(52) Cooperative Patent Classification (CPC):
**H04B 7/0404; H04B 7/0413; H04B 7/06;
H04W 72/04; H04W 72/21; H04W 72/23**

(86) International application number:
**PCT/KR2023/000819**

(87) International publication number:
**WO 2023/140591 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.01.2022 KR 20220008074**

(71) Applicant: **LG Electronics Inc.
Yeongdeungpo-gu
Seoul 07336 (KR)**

(72) Inventor: **KANG, Jiwon
Seoul 06772 (KR)**

(74) Representative: **Maikowski & Ninnemann
Patentanwälte Partnerschaft mbB
Postfach 15 09 20
10671 Berlin (DE)**

(54) **METHOD AND DEVICE FOR BANDWIDTH PART SWITCHING-BASED UPLINK TRANSMISSION OR RECEPTION IN WIRELESS COMMUNICATION SYSTEM**

(57) Disclosed are a method and device for bandwidth part (BWP) switching-based uplink transmission or reception in a wireless communication system. A method performed in a wireless communication system by a terminal according to an embodiment disclosed herein may comprise the steps of: receiving configuration information about a first BWP and a second BWP; and performing uplink transmission on the activated second BWP on the basis of a configuration related to a specific index for the terminal and on the basis of a BWP inactivity timer not being applied.

FIG.15

Receive configuration information on a plurality of BWPs — S1510

Based on configuration for specific index for terminal, and whether to apply BWP inactivity timer, perform uplink transmission on activated BWP — S1520

**Description**

[TECHNICAL FIELD]

The present disclosure relates to a wireless communication system, and more specifically, to a method and a device for performing uplink transmission or reception based on bandwidth part switching in a wireless communication system.

[BACKGROUND ART]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and a device for transmitting or receiving an uplink based on bandwidth part switching in a wireless communication system.

An additional technical problem of the present disclosure is to provide a method and a device for preventing switching to a bandwidth part unrelated to an index for a terminal based on expiration of a bandwidth part inactivity timer in a wireless communication system.

An additional technical problem of the present disclosure is to provide a method and a device for performing switching to a bandwidth part related to one of indexes for a terminal based on expiration of a bandwidth part inactivity timer in a wireless communication system.

The technical objects to be achieved by the present disclosure are not limited to the above-described technical objects, and other technical objects which are not described herein will be clearly understood by those skilled in the pertinent art from the following description.

[Technical Solution]

A method performed in a wireless communication system by a terminal according to an embodiment of the present disclosure may include receiving from a network configuration information about a first bandwidth part (BWP) and a second BWP; and performing uplink transmission on an activated second BWP based on a configuration related to a specific index for the terminal and a BWP inactivity timer not being applied.

A method performed in a wireless communication system by a base station according to an additional embodiment of the present disclosure may include transmitting to a terminal configuration information about a first bandwidth part (BWP) and a second BWP; and performing at least one of downlink transmission or uplink reception on an activated second BWP based on a configuration related to a specific index for the terminal and a BWP inactivity timer not being applied.

A method performed in a wireless communication system by a terminal according to an additional embodiment of the present disclosure may include receiving from a network configuration information about a first bandwidth part (BWP) and a second BWP; performing uplink transmission on an activated second BWP based on a configuration related to a specific index for the terminal; and performing switching to the first BWP from the second BWP if a BWP inactivity timer is expired, wherein the first BWP may be related to the lowest specific index or the smallest number of SRS ports or a specific index for a terminal related to the first BWP may be requested or reported from the terminal to the network.

A method performed in a wireless communication system by a base station according to an additional embodiment of the present disclosure may include transmitting to a terminal configuration information about a first bandwidth part (BWP) and a second BWP; performing at least one of downlink transmission or uplink reception on an activated second BWP based on a configuration related to a specific index for the terminal; and performing at least one of downlink transmission or uplink reception on the first BWP if a BWP inactivity timer is expired, wherein the first BWP may be related to the lowest specific index or the smallest number of SRS ports or a specific index for a terminal related to the first BWP may be requested or reported from the terminal to the network.

[Technical Effects]

According to an embodiment of the present disclosure, a method and a device for transmitting or receiving an uplink based on bandwidth part switching in a wireless communication system may be provided.

According to an embodiment of the present disclosure, a method and a device for preventing switching to a bandwidth part unrelated to an index for a terminal based on expiration of a bandwidth part inactivity timer in a wireless communication system may be provided.

According to an embodiment of the present disclosure, a method and a device for performing switching to a bandwidth part related to one of indexes for a terminal based on expiration of a bandwidth part inactivity timer in a wireless communication system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram illustrating a downlink beam management operation in a wireless communication system to which the present disclosure may be applied.

FIG. 8 is a diagram illustrating a downlink beam management procedure using SSB in a wireless communication system to which the present disclosure may be applied.

FIG. 9 is a diagram illustrating a downlink beam management operation using CSI-RS in a wireless communication system to which the present disclosure may be applied.

FIG. 10 is a diagram illustrating a process for determining a reception beam of a terminal in a wireless communication system to which the present disclosure may be applied.

FIG. 11 is a diagram illustrating a transmission beam determination process of a base station in a wireless communication system to which the present disclosure may be applied.

FIG. 12 is a diagram illustrating resource allocation in time and frequency domains related to the operation of downlink beam management in a wireless communication system to which the present disclosure may be applied.

FIG. 13 is a diagram illustrating an uplink beam management operation using SRS in a wireless communication system to which the present disclosure may be applied.

FIG. 14 is a diagram illustrating an uplink beam management procedure in a wireless communication system to which the present disclosure may be applied.

FIG. 15 is a flowchart for describing an example of an uplink transmission operation of a terminal according to the present disclosure.

FIG. 16 is a flowchart for describing an example of an uplink reception operation of a base station according to the present disclosure.

FIG. 17 is a diagram for describing an example of signaling between a terminal and a base station according to the present disclosure.

FIG. 18 illustrates a block configuration of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 3 6.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

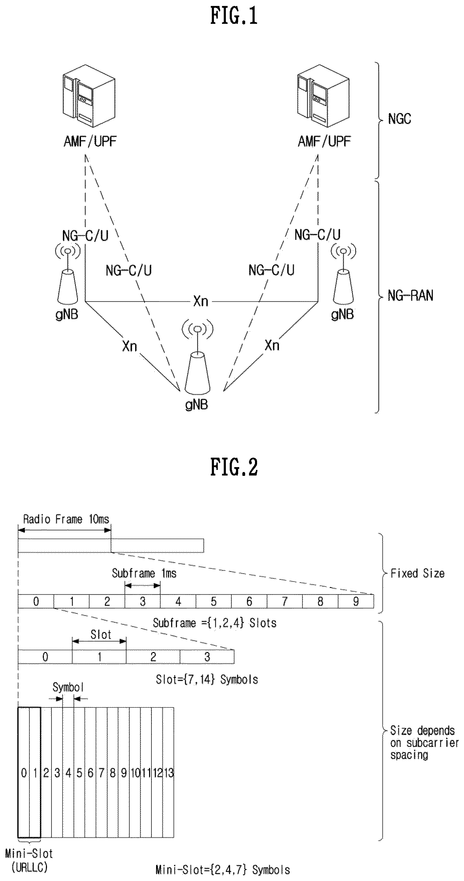

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_\varepsilon$ is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^\mu \in \{0,...,N_{slot}^{subframe,\mu}-1\}$ in a subframe and are numbered in an increasing order of $n_{s,f}^\mu \in \{0,...,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

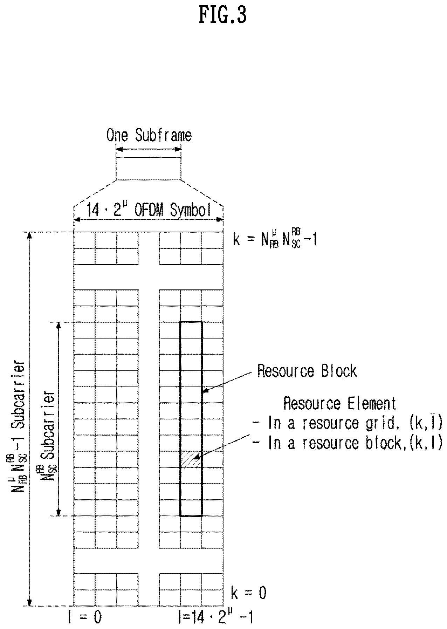

FIG. 3 illustrates a resource grid in a wireless communication system to which the present disclosure may be applied.

In reference to FIG. 3, it is illustratively described that a resource grid is configured with $N_{RB}^\mu N_{sc}^{RB}$ subcarriers in a frequency domain and one subframe is configured with $14 \cdot 2^\mu$ OFDM symbols, but it is not limited thereto. In an NR system, a transmitted signal is described by OFDM symbols of $2^\mu N_{symb}^{(\mu)}$ and one or more resource grids configured with $N_{RB}^\mu N_{sc}^{RB}$ subcarriers. Here, $N_{RB}^\mu \leq N_{RB}^{max,\mu}$. The $N_{RB}^{max,\mu}$ represents a maximum transmission bandwidth, which may be different between an uplink and a downlink as well as between numerologies.

In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^\mu N_{sc}^{RB}-1$ is an index in a frequency domain and $l'=0,...,2^\mu N_{symb}^{(\mu)}-1$ refers to a position of a symbol in a subframe. When referring to a resource element in a slot, an index pair (k,l) is used. Here, $l=0,...,N_{symb}^\mu-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number). Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

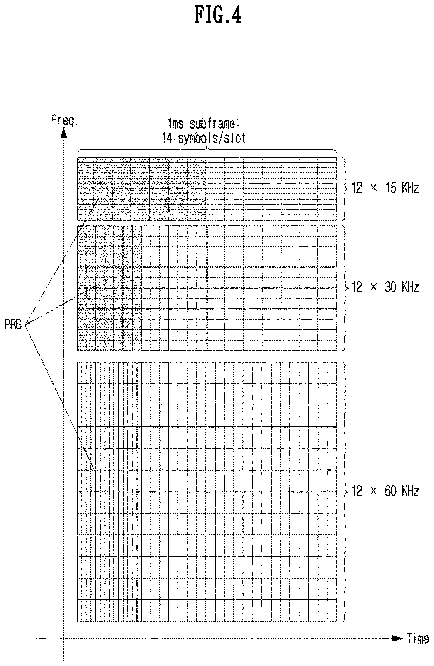

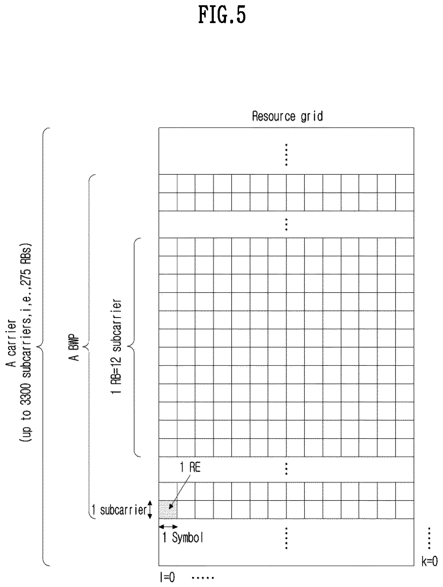

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP (Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP.

But, a configuration on a DL/UL BWP may not be received when a terminal performs an initial access procedure or before a RRC connection is set up, so a DL/UL BWP which is assumed by a terminal under these situations is defined as an initial active DL/UL BWP.

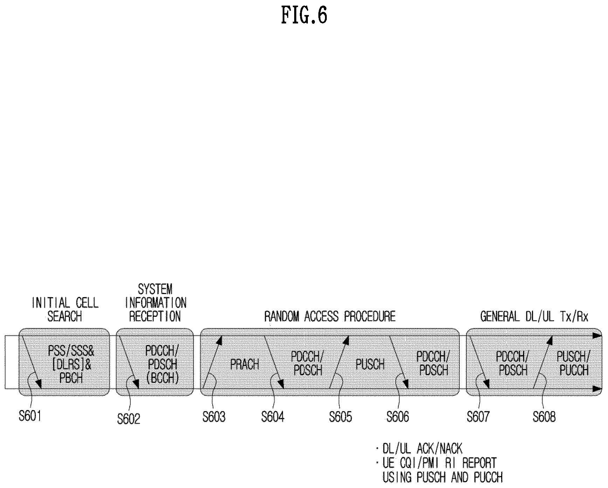

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

beam management (BM)

A BM procedure is L1(layer 1)/L2(layer 2) procedures to obtain and maintain a set of beams of a base station (e.g., a gNB, a TRP, etc.) and/or terminal (e.g., a UE) beams which may be used for downlink(DL) and uplink(UL) transmission/reception, it may include the following procedures and terms.

Beam measurement: An operation that a base station or a UE measures a property of a received beamformed signal

Beam determination: An operation that a base station or a UE selects its Tx beam / Rx beam

Beam sweeping: An operation that a spatial region is covered by using a Tx and/or Rx beam for a certain time interval in a pre-determined method

Beam report: An operation that a UE reports information of a beamformed signal based on beam measurement

A BM procedure may be classified into (1) a DL BM procedure using a SS(synchronization signal)/PBCH(physical broadcast channel) Block or a CSI-RS and (2) an UL BM procedure using an SRS(sounding reference signal).

In addition, each BM procedure may include Tx beam sweeping for determining a Tx Beam and Rx beam sweeping for determining a Rx beam.

Hereinafter, a DL BM procedure will be described.

A DL BM procedure may include (1) transmission of beamformed DL RSs (reference signals) of a base station (e.g., a CSI-RS or a SS Block(SSB)) and (2) beam reporting of a terminal.

Here, beam reporting may include preferred DL RS ID(identifier)(s) and corresponding L1-RSRP(Reference Signal Received Power).

The DL RS ID may be a SSBRI(SSB Resource Indicator) or a CRI(CSI-RS Resource Indicator).

Hereinafter, a DL BM procedure using an SSB will be described.

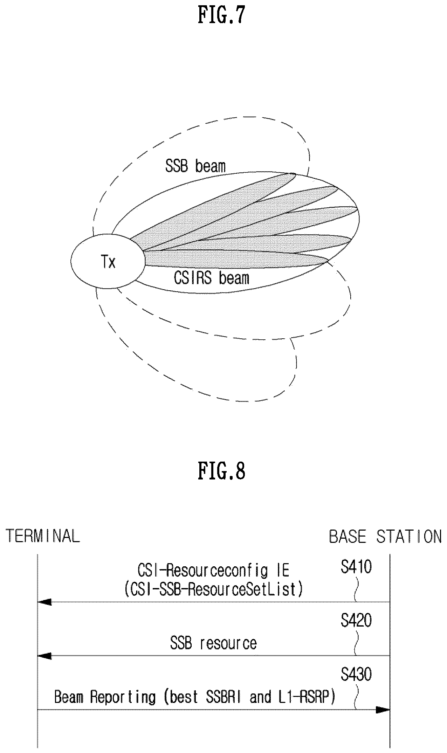

FIG. 7 is a diagram which illustrates a downlink beam management operation in a wireless communication system to which the present disclosure may be applied.

In reference to FIG. 7, an SSB beam and a CSI-RS beam may be used for beam measurement. A measurement metric is L1-RSRP per resource/block. An SSB may be used for coarse beam measurement and a CSI-RS may be used for fine beam measurement. An SSB may be used for both of Tx beam sweeping and Rx beam sweeping.

Rx beam sweeping using an SSB may be performed while an UE changes an Rx beam for the same SSBRI across a plurality of SSB bursts. In this case, one SS burst includes one or more SSBs and one SS burst set includes one or more SSB bursts.

FIG. 8 is a diagram which illustrates a downlink beam management procedure using SSB in a wireless communication system to which the present disclosure may be applied.

A configuration on a beam report using an SSB is performed in a CSI/beam configuration in a RRC connected state (or a RRC connected mode).

In reference to FIG. 8, a terminal receives CSI-ResourceConfig IE including CSI-SSB-ResourceSetList including SSB resources used for BM from a base station (S410).

Table 6 represents an example of CSI-ResourceConfig IE and as in Table 6, a BM configuration using an SSB configures an SSB like a CSI-RS resource without being separately defined.

【Table 6】

```
-- ASN1START

-- TAG-CSI-RESOURCECONFIG-START


CSI-ResourceConfig ::=              SEQUENCE {
    csi-ResourceConfigId            CSI-ResourceConfigId,
    csi-RS-ResourceSetList              CHOICE {
        nzp-CSI-RS-SSB                  SEQUENCE {
            nzp-CSI-RS-ResourceSetList      SEQUENCE (SIZE
(1..maxNrofNZP-CSI-RS-ResourceSetsPerConfig)) OF NZP-CSI-RS-ResourceSetId
OPTIONAL,
            csi-SSB-ResourceSetList         SEQUENCE (SIZE
(1..maxNrofCSI-SSB-ResourceSetsPerConfig)) OF CSI-SSB-ResourceSetId
    OPTIONAL
        },
        csi-IM-ResourceSetList          SEQUENCE (SIZE (1..maxNrofCSI-IM-
ResourceSetsPerConfig)) OF CSI-IM-ResourceSetId
    },


    bwp-Id                          BWP-Id,
    resourceType                    ENUMERATED { aperiodic, semiPersistent,
periodic },
    ...
}


-- TAG-CSI-RESOURCECONFIGTOADDMOD-STOP

-- ASN1STOP
```

In Table 6, a csi-SSB-ResourceSetList parameter represents a list of SSB resources used for beam management and reporting in one resource set. Here, an SSB resource set may be configured as {SSBx1, SSBx2, SSBx3, SSBx4, ...}. An SSB index may be defined from 0 to 63. A terminal receives an SSB resource from the base station based on the CSI-SSB-ResourceSetList (S420).

When CSI-RS reportConfig related to a report on a SSBRI and L1-RSRP is configured, the terminal performs (beam) reporting of the best SSBRI and corresponding L1-RSRP to a base station (S430).

Hereinafter, a DL BM procedure using a CSI-RS will be described.

Describing a usage of a CSI-RS, i) a repetition parameter is configured for a specific CSI-RS resource set and when TRS_info is not configured, a CSI-RS is used for beam management, ii) when a repetition parameter is not configured and TRS_info is configured, a CSI-RS is used for a TRS(tracking reference signal), iii) when a repetition parameter is not configured and TRS_info is not configured, a CSI-RS is used for CSI acquisition.

Such a repetition parameter may be configured only for CSI-RS resource sets associated with CSI-ReportConfig having a report of L1 RSRP or 'No Report(or None)'.

If a terminal is configured with CSI-ReportConfig in which reportQuantity is configured as 'cri-RSRP' or 'none' and CSI-ResourceConfig for channel measurement (a higher layer parameter resourcesForChannelMeasurement) does not include a higher layer parameter 'trs-Info' and includes NZP-CSI-RS-ResourceSet in which a higher layer parameter 'repetition' is configured, the terminal may be configured only with a same number of port (1-port or 2-port) having a higher layer parameter 'nrofPorts' for all CSI-RS resources in NZP-CSI-RS-ResourceSet.

When (a higher layer parameter) repetition is configured as 'ON', it is related to a Rx beam sweeping procedure of a terminal. In this case, when a terminal is configured with NZP-CSI-RS-ResourceSet, the terminal may assume that at least one CSI-RS resource in NZP-CSI-RS-ResourceSet is transmitted with the same downlink spatial domain transmission filter. In other words, at least one CSI-RS resource in NZP-CSI-RS-ResourceSet is transmitted through the same Tx beam. Here, at least one CSI-RS resource in NZP-CSI-RS-ResourceSet may be transmitted in a different OFDM symbol. In addition, a terminal does not expect to receive a different periodicity in periodicityAndOffset in all CSI-RS resources in NZP-CSI-RS-Resourceset.

Meanwhile, when repetition is configured as 'OFF', it is related to a Tx beam sweeping procedure of a base station. In this case, when repetition is configured as 'OFF', a terminal does not assume that at least one CSI-RS resource in NZP-CSI-RS-ResourceSet is transmitted in the same downlink spatial domain transmission filter. In other words, at least one CSI-RS resource in NZP-CSI-RS-ResourceSet is transmitted through a different Tx beam.

In other words, when reportQuantity of the CSI-RS reportConfig IE is configured as 'ssb-Index-RSRP', a terminal reports the best SSBRI and corresponding L1-RSRP to a base station.

In addition, when a CSI-RS resource may be configured in the same OFDM symbol(s) as an SSB(SS/PBCH Block) and 'QCL-TypeD' is applicable, the terminal may assume that a CSI-RS and an SSB are quasi co-located with regard to 'QCL-TypeD'.

Here, the QCL TypeD may mean that antenna ports are quasi-colocated with regard to a spatial Rx parameter. When a terminal receives a plurality of DL antenna ports in a QCL Type D relationship, it is allowed to apply the same Rx beam. In addition, a terminal does not expect that a CSI-RS will be configured in a RE overlapped with a RE of an SSB.

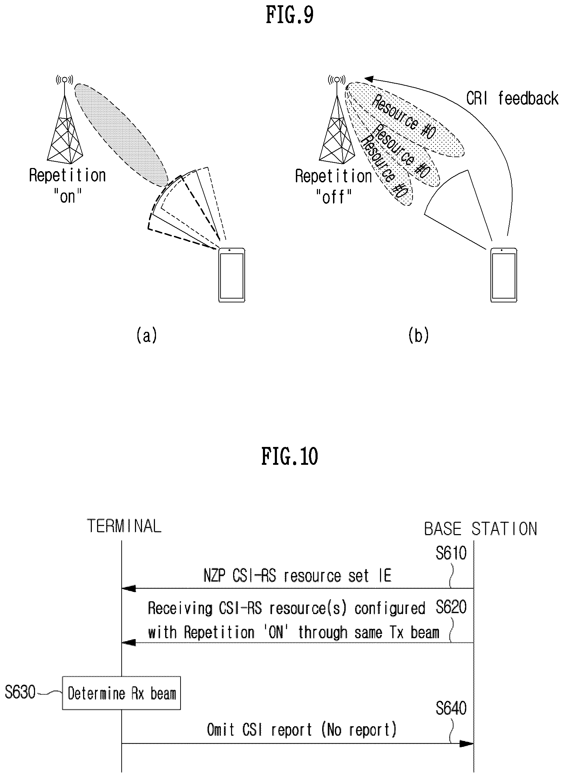

FIG. 9 is a diagram which illustrates a downlink beam management operation using CSI-RS in a wireless communication system to which the present disclosure may be applied.

FIG. 9(a) represents a Rx beam determination (or refinement) procedure of a terminal and FIG. 9(b) represents a Tx beam sweeping procedure of a base station. In addition, FIG. 9(a) is a case when a repetition parameter is configured as 'ON' and FIG. 9(b) is a case when a repetition parameter is configured as 'OFF'.

FIG. 10 is a diagram which illustrates an Rx beam determination process of a terminal in a wireless communication system to which the present disclosure may be applied.

In reference to FIG. 9(a) and FIG. 10, an Rx beam determination process of a terminal is described.

A terminal receives NZP CSI-RS resource set IE including a higher layer parameter repetition through RRC signaling from a base station (S610). Here, the repetition parameter is configured as 'ON'.

A terminal repetitively receives resources in a CSI-RS resource set configured as repetition 'ON' through the same Tx beam (or DL spatial domain transmission filter) of a base station in a different OFDM symbol (S620).

A terminal determines its Rx beam (S630).

A terminal omits a CSI report (S640). In this case, reportQuantity of a CSI report configuration may be configured as 'No report (or None)'.

In other words, the terminal may omit a CSI report when it is configured as repetition 'ON'.

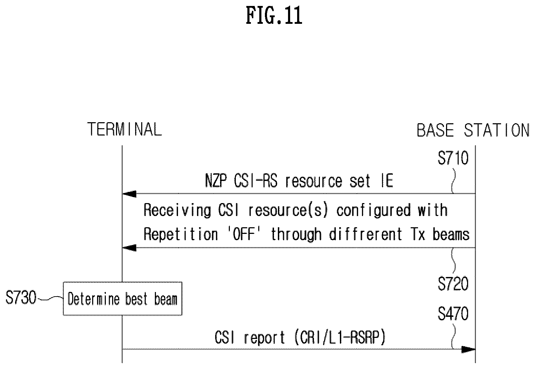

FIG. 11 is a diagram which illustrates a Tx beam determination process of a base station in a wireless communication system to which the present disclosure may be applied.

In reference to FIG. 9(b) and FIG. 11, a Tx beam determination process of a base station is described.

A terminal receives NZP CSI-RS resource set IE including a higher layer parameter repetition through RRC signaling from a base station (S710). Here, the repetition parameter is configured as 'OFF' and it is related to a Tx beam sweeping procedure of a base station.

A terminal receives resources in a CSI-RS resource set configured as repetition 'OFF' through a different Tx beam (or DL spatial domain transmission filter) of a base station (S720).

A terminal selects (or determines) the best beam (S740).

A terminal reports an ID and related quality information (e.g., L1-RSRP) of a selected beam to a base station (S740). In this case, reportQuantity of a CSI report configuration may be configured as 'CRI + L1-RSRP'.

In other words, when a CSI-RS is transmitted for BM, the terminal reports a CRI and a related L1-RSRP.

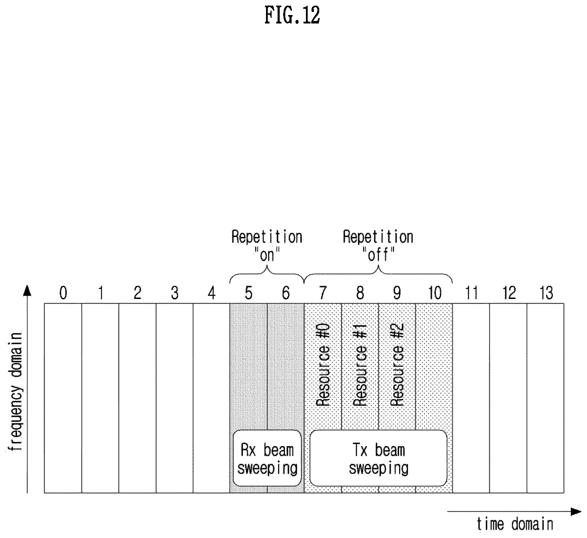

FIG. 12 is a diagram which illustrates resource allocation in a time and frequency domain related to a downlink beam management operation in a wireless communication system to which the present disclosure may be applied.

In reference to FIG. 12, it is shown that when repetition 'ON' is configured in a CSI-RS resource set, a plurality of CSI-RS resources are repetitively used by applying the same Tx beam and when repetition 'OFF' is configured in a CSI-RS resource set, different CSI-RS resources are transmitted in a different Tx beam.

Hereinafter, a beam indication method related to downlink BM will be described.

A terminal may be configured by RRC with a list of a maximum M candidate transmission configuration indication (TCI) states at least for a purpose of a QCL(Quasi Co-location) indication. Here, M may be 64.

Each TCI state may be configured as one RS set. Each ID of a DL RS at least for a spatial QCL purpose (QCL Type D) in a RS set may refer to one of DL RS types such as an SSB, a P(periodic)-CSI RS, an SP(semi-persistent)-CSI RS, an A(aperiodic)-CSI RS, etc.

An ID of DL RS(s) in a RS set used at least for a purpose of a spatial QCL may be initialized/updated at least by explicit signaling.

Table 7 illustrates a TCI-State information element (IE).

A TCI-State IE is associated with a quasi co-location (QCL) type corresponding to one or two DL reference signals (RS).

【Table 7】

```
-- ASN1START

-- TAG-TCI-STATE-START


TCI-State ::=                    SEQUENCE {
    tci-StateId                     TCI-StateId,
    qcl-Type1                       QCL-Info,
```

```
        qcl-Type2                          QCL-Info
                          OPTIONAL,    -- Need R

        ...

}


QCL-Info ::=                        SEQUENCE {
        cell                               ServCellIndex
                          OPTIONAL,    -- Need R
        bwp-Id                             BWP-Id
                          OPTIONAL, -- Cond CSI-RS-Indicated
        referenceSignal                    CHOICE {
            csi-rs                             NZP-CSI-RS-ResourceId,
            ssb                                SSB-Index
        },
        qcl-Type                           ENUMERATED {typeA, typeB, typeC, typeD},
        ...
}


-- TAG-TCI-STATE-STOP

-- ASN1STOP
```

In Table 7, a bwp-Id parameter represents a DL BWP(bandwidth part) where an RS is located, a cell parameter represents a carrier where a RS is located and a referencesignal parameter represents reference antenna port(s) which is a source of a quasi co-location for corresponding target antenna port(s) or a reference signal including it. The target antenna port(s) may be a CSI-RS, a PDCCH DMRS, or a PDSCH DMRS. In an example, a corresponding TCI state ID(identifier) may be indicated in NZP CSI-RS resource configuration information to indicate QCL reference RS information for a NZP(non-zero power) CSI-RS. In another example, a TCI state ID may be indicated to each CORESET configuration to indicate QCL reference information for PDCCH DMRS antenna port(s). In another example, a TCI state ID may be indicated through DCI to indicate QCL reference information for PDSCH DMRS antenna port(s). Hereinafter, uplink beam management will be described.

For UL BM, beam reciprocity (or beam correspondence) between a Tx beam and a Rx beam may be valid or may not be valid according to terminal implementation. If reciprocity between a Tx beam and a Rx beam is valid both in a base station and a terminal, a UL beam pair may be matched by a DL beam pair. But, when reciprocity between a Tx beam and a Rx beam is not valid in any one of a base station and a terminal, a process for determining a UL beam pair is required separately from a DL beam pair determination.

In addition, although both of a base station and a terminal maintain beam correspondence, a base station may use a UL BM procedure for determining a DL Tx beam without requesting a terminal to report a preferred beam.

UL BM may be performed through beamformed UL SRS transmission and whether UL BM of an SRS resource set is applied may be configured by a (higher layer parameter) usage. When a usage is configured as 'BeamManagement(BM)', only one SRS resource may be transmitted in each of a plurality of SRS resource sets in a given time instant.

A terminal may be configured with one or more SRS(Sounding Reference Symbol) resource sets configured by (a higher layer parameter) SRS-ResourceSet (through higher layer signaling, RRC signaling, etc.) For each SRS resource set, a UE may be configured with K≥1 SRS resources (a higher layer parameter SRS-resource). Here, K is a natural number and the maximum number of K is indicated by SRS_capability.

Like DL BM, an UL BM procedure may be also classified into Tx beam sweeping of a terminal and Rx beam sweeping of a base station.

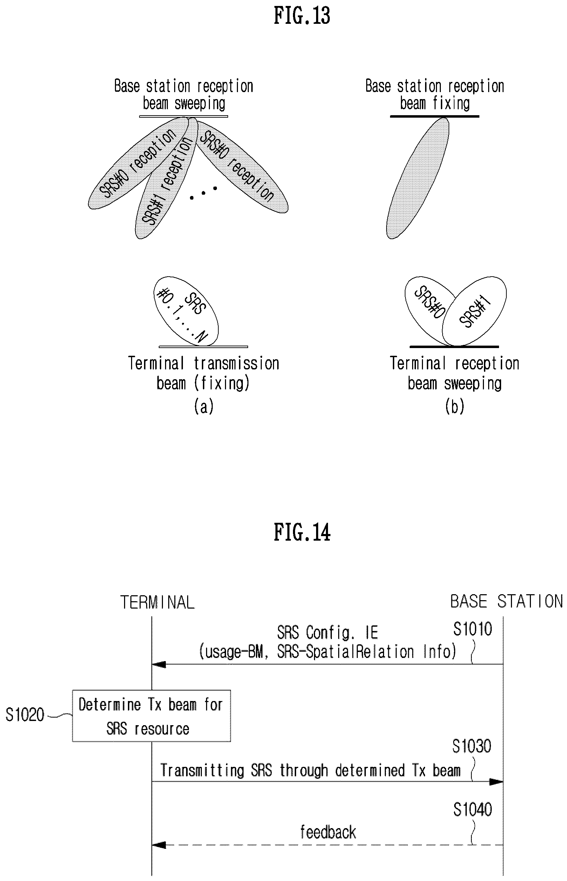

FIG. 13 is a diagram which illustrates an uplink beam management operation using SRS in a wireless communication system to which the present disclosure may be applied.

FIG. 13(a) illustrates a Rx beam determination operation of a base station and FIG. 13(b) illustrates a Tx beam sweeping operation of a terminal.

FIG. 14 is a diagram which illustrates an uplink beam management procedure in a wireless communication system to which the present disclosure may be applied.

A terminal receives RRC signaling (e.g., an SRS-Config IE) including a (higher layer parameter) usage parameter configured as 'beam management' from a base station (S 1010).

Table 8 represents an example of an SRS-Config IE(Information Element) and an SRS-Config IE is used for SRS transmission configuration. An SRS-Config IE includes a list of SRS-Resources and a list of SRS-ResourceSets. Each SRS resource set means a set of SRS-resources.

A network may trigger transmission of an SRS resource set by using configured aperiodicSRS-ResourceTrigger (L1 DCI).

【Table 8】

```
-- ASN1START
-- TAG-MAC-CELL-GROUP-CONFIG-START
```

```
SRS-Config ::=                          SEQUENCE {
    srs-ResourceSetToReleaseList        SEQUENCE (SIZE(1..maxNrofSRS-
ResourceSets)) OF SRS-ResourceSetId         OPTIONAL,    -- Need N
    srs-ResourceSetToAddModList         SEQUENCE (SIZE(1..maxNrofSRS-
ResourceSets)) OF SRS-ResourceSet           OPTIONAL,    -- Need N


    srs-ResourceToReleaseList           SEQUENCE (SIZE(1..maxNrofSRS-
Resources)) OF SRS-ResourceId               OPTIONAL,    -- Need N
    srs-ResourceToAddModList            SEQUENCE (SIZE(1..maxNrofSRS-
Resources)) OF SRS-Resource                 OPTIONAL,    -- Need N


    tpc-Accumulation                    ENUMERATED {disabled}
                                            OPTIONAL,    -- Need S

    ...
}


SRS-ResourceSet ::=                     SEQUENCE {
    srs-ResourceSetId                       SRS-ResourceSetId,
    srs-ResourceIdList                      SEQUENCE (SIZE(1..maxNrofSRS-
ResourcesPerSet)) OF SRS-ResourceId             OPTIONAL, -- Cond Setup
    resourceType                            CHOICE {
        aperiodic                               SEQUENCE {
            aperiodicSRS-ResourceTrigger            INTEGER (1..maxNrofSRS-
TriggerStates-1),
            csi-RS                                  NZP-CSI-RS-ResourceId
OPTIONAL, -- Cond NonCodebook
            slotOffset                              INTEGER (1..32)
OPTIONAL, -- Need S
            ...,
            [[
            aperiodicSRS-ResourceTriggerList            SEQUENCE
(SIZE(1..maxNrofSRS-TriggerStates-2))
```

```
                                                                    OF INTEGER
(1..maxNrofSRS-TriggerStates-1)   OPTIONAL    -- Need M
                ]]
        },
        semi-persistent                         SEQUENCE {
            associatedCSI-RS                         NZP-CSI-RS-ResourceId
OPTIONAL, -- Cond NonCodebook

            ...

        },
        periodic                                 SEQUENCE {
            associatedCSI-RS                         NZP-CSI-RS-ResourceId
OPTIONAL, -- Cond NonCodebook

            ...

        }
    },
    usage                               ENUMERATED
{beamManagement, codebook, nonCodebook, antennaSwitching},
    alpha                               Alpha
OPTIONAL, -- Need S
    p0                                  INTEGER (-202..24)
OPTIONAL, -- Cond Setup
    pathlossReferenceRS                 PathlossReferenceRS-Config
OPTIONAL, -- Need M
    srs-PowerControlAdjustmentStates    ENUMERATED { sameAsFci2,
separateClosedLoop}                                 OPTIONAL, -- Need S
    ...,
    [[
    pathlossReferenceRSList-r16         SetupRelease
{ PathlossReferenceRSList-r16}
OPTIONAL   -- Need M
    ]]
}
```

```
PathlossReferenceRS-Config ::=              CHOICE {
    ssb-Index                                   SSB-Index,
    csi-RS-Index                                NZP-CSI-RS-ResourceId
}
SRS-PosResourceSet-r16 ::=                  SEQUENCE {
    srs-PosResourceSetId-r16                    SRS-PosResourceSetId-r16,
    srs-PosResourceIdList-r16                   SEQUENCE
(SIZE(1..maxNrofSRS-ResourcesPerSet)) OF SRS-PosResourceId-r16


OPTIONAL, -- Cond Setup
    resourceType-r16                            CHOICE {
        aperiodic-r16                               SEQUENCE {
            aperiodicSRS-ResourceTriggerList-r16        SEQUENCE
(SIZE(1..maxNrofSRS-TriggerStates-1))

                                                            OF INTEGER
(1..maxNrofSRS-TriggerStates-1)             OPTIONAL, -- Need M

            ...
        },
        semi-persistent-r16                         SEQUENCE {

            ...
        },
        periodic-r16                                SEQUENCE {

            ...
        }
    },
    alpha-r16                                   Alpha
OPTIONAL, -- Need S
    p0-r16                                      INTEGER (-202..24)
OPTIONAL, -- Cond Setup
    pathlossReferenceRS-Pos-r16                 CHOICE {
        ssb-IndexServing-r16                        SSB-Index,
        ssb-Ncell-r16                               SSB-InfoNcell-r16,
        dl-PRS-r16                                  DL-PRS-Info-r16
```

```
        }
OPTIONAL, -- Need M

    ...

}


SRS-SpatialRelationInfo ::=          SEQUENCE {
    servingCellId                        ServCellIndex
    OPTIONAL,    -- Need S
    referenceSignal                      CHOICE {
        ssb-Index                            SSB-Index,
        csi-RS-Index                         NZP-CSI-RS-ResourceId,
        srs                                      SEQUENCE {
            resourceId                           SRS-ResourceId,
            uplinkBWP                            BWP-Id
        }
    }
}


SRS-SpatialRelationInfoPos-r16 ::=          CHOICE {
    servingRS-r16                                SEQUENCE {
        servingCellId                                ServCellIndex
OPTIONAL,     -- Need S
        referenceSignal-r16                          CHOICE {
            ssb-IndexServing-r16                         SSB-Index,
            csi-RS-IndexServing-r16                      NZP-CSI-RS-ResourceId,
            srs-SpatialRelation-r16                      SEQUENCE {
                resourceSelection-r16                        CHOICE {
                    srs-ResourceId-r16                           SRS-ResourceId,
                    srs-PosResourceId-r16                        SRS-
PosResourceId-r16
                },
                uplinkBWP-r16                                BWP-Id
            }
```

```
        }
    },
    ssb-Ncell-r16                        SSB-InfoNcell-r16,
    dl-PRS-r16                           DL-PRS-Info-r16
}


SRS-ResourceId ::=                       INTEGER (0..maxNrofSRS-Resources-1)
```

In Table 8, usage represents a higher layer parameter which indicates whether an SRS resource set is used for beam management or is used for codebook-based or non-codebook-based transmission. A usage parameter corresponds to a L1 parameter 'SRS-SetUse'. 'spatialRelationInfo' is a parameter which represents a configuration of a spatial relation between a reference RS and a target SRS. Here, the reference RS may be SSB, CSI-RS, or SRS corresponding to the L1 parameter 'SRS-SpatialRelationInfo'. Above, usage is set for each SRS resource set. If SRS is set by 'SRS-PosResourceSet-r16', the reference RS may correspond to a DL PRS (Positioning reference signal), and usage may be configured for each SRS resource set.

A terminal determines a Tx beam for an SRS resource which will be transmitted based on SRS-SpatialRelation Info included in the SRS-Config IE (S1020). Here, SRS-SpatialRelation Info is configured per SRS resource and represents whether the same beam as a beam used in a SSB, a CSI-RS or a SRS will be applied per SRS resource. In addition, SRS-SpatialRelationInfo may be configured or may not be configured for each SRS resource.

If SRS-SpatialRelationInfo is configured for an SRS resource, the same beam as a beam used in a SSB, a CSI-RS or a SRS is applied and transmitted. But, if SRS-SpatialRelationInfo is not configured for an SRS resource, the terminal randomly determines a Tx beam and transmits an SRS through the determined Tx beam (S1030).

In more detail, for a P-SRS that 'SRS-ResourceConfigType' is configured as 'periodic':

i) if SRS-SpatialRelationInfo or SRS-PosResource-r16 is set to 'SSB/PBCH', the UE may transmit the corresponding SRS resource by applying a spatial domain transmission filter that is the same as (or generated from) the spatial domain Rx filter used for reception of SSB/PBCH; or

ii) if SRS-SpatialRelationInfo or SRS-PosResource-r16 is set to 'CSI-RS', the UE may transmit the SRS resource by applying the same spatial domain transmission filter used for reception of periodic CSI-RS or SP (semi-persistent) CSI-RS; or

iii) if SRS-SpatialRelationInfo or SRS-PosResource-r16 is set to 'SRS', the UE may transmit the corresponding SRS resource by applying the same spatial domain transmission filter used for periodic SRS transmission.

iv) If spatialRelationInfoPos-r16 is set to 'PRS', the UE may transmit the corresponding SRS resource by applying the same spatial domain transmission filter used for reception of DL PRS.

Although 'SRS-ResourceConfigType' is configured as 'SP(semi-persistent)-SRS' or 'AP(aperiodic)-SRS', a beam determination and transmission operation may be applied in a way similar to the above.

Additionally, a terminal may receive or may not receive a feedback on an SRS from a base station as in the following three cases (S 1040).

i) when Spatial_Relation_Info is configured for all SRS resources in a SRS resource set, a terminal transmits an SRS with a beam indicated by a base station. For example, when Spatial_Relation_Info indicates all the same SSB, CRI or SRI, a terminal repetitively transmits an SRS with the same beam. This case corresponds to FIG. 13(a) as a usage for a base station to select an Rx beam.

ii) Spatial_Relation_Info may not be configured for all SRS resources in an SRS resource set. In this case, a terminal may transmit with freely changing SRS beams. In other words, this case corresponds to FIG. 13(b) as a usage for a terminal to sweep Tx beams.

iii) Spatial_Relation_Info may be configured only for a part of SRS resources in an SRS resource set. In this case, for a configured SRS resource, an SRS may be transmitted with an indicated beam, and for a SRS resource that Spatial_Relation_Info is not configured an SRS may be transmitted by randomly applying a Tx beam by a terminal.

BM procedure in improved wireless communication system

To ensure flexibility in beam indication in a basic wireless communication system, beams are separately indicated for each DL/UL channel/RS resource, and the indication method may be configured for each channel/RS.

In the case of the above indication method, in order to change the serving beam of multiple terminals that communicate with the base station using a single beam, the base station must indicate each terminal to change the beam for each channel/RS resource. Accordingly, there is a problem that signaling overhead may increase and beam change latency may increase.

In addition, since UL power control-related parameters (e.g., pathloss RS (PL RS)) must be changed for each UL channel/RS along with the UL beam change, signaling overhead/latency problems existed.

To resolve the problem, in improved wireless communication system, i) default spatial relation/PL RS configuration, ii) multi-CC simultaneous TCI/spatial relation update, iii) PUCCH resource group configuration based on spatial relation update, iv) MAC CE based spatial relation indication for aperiodic/semi-persistent SRS, and v) MAC CE based PL RS update for aperiodic/semi-persistent SRS and PUSCH may be applied.

Additionally, in an improved wireless communication system, the base station may configure not only RS for channel measurement but also resources for interference measurement for the terminal. The UE may measure the L1- SINR for the configured channel measurement RS and interference measurement resources, and report one or more RSs corresponding to one or more LI-SINRs with a larger value among the measured L1-SINRs.

In addition, a method described later may be applied to configure/indicate a beam in a channel/RS integrated manner for a terminal operating with a single serving beam. Hereinafter, a TCI that configures/indicates a beam in an integrated channel/RS manner for the UE will be referred to as a unified TCI state.

Specifically, the DL unified TCI state may indicate which QCL type-D RS applies for the PDCCH, PDSCH, or/and CSI-RS resources, and the UL unified TCI state may indicate the spatial relation RS (and/or PL RS) applied for PUCCH, PUSCH, and/or SRS resources.

In addition, for a UE for which beam correspondence is established (as with the default spatial relation/PL RS), since the UL spatial relation and PL RS may also be matched with the DL beam RS, the unified TCI state may be applied to both channels/RS of DL/UL. The unified TCI state that can be applied to all DL/UL channels/RS is called the joint DL/UL TCI state, and the following two modes can be supported.

    i) Joint DL/UL TCI configuration/indicating mode: DL RS configured/indicated by Joint TCI state may be applied as QCL type-D RS for DL channels/RSs. As another example, the DL RS configured/indicated by the Joint TCI state may also be applied as a spatial relation RS (or/and PL RS) for UL channels/RSs. That is, when an update to the joint TCI state is indicated, the beam RS (or/and PL RS) for the corresponding DL channels/RSs and UL channels/RSs may be changed together.

    ii) Separate DL and UL TCI setup/indication modes: QCL type-D source RS for DL channels/RSs is configured/indicated by DL TCI state, and the spatial relation RS (or/and PL RS) for UL channels/RSs may be configured/indicated by the UL TCI state. Here, the DL TCI state and UL TCI state may be configured/indicated separately.

The joint DL/UL TCI status may be indicated/updated through MAC-CE and/or DCI. Specifically, one or more TCI state(s) among a plurality of TCI states (i.e., TCI state pool) established by RRC signaling may be activated by MAC-CE.

When multiple TCI states are activated by MAC-CE, one TCI state among the multiple TCI states may be indicated by DCI. One TCI state among a plurality of TCI states may be indicated by DL DCI format (DCI format 1-1/1-2) (or/and DCI without PDSCH scheduling). If the DCI does not include PDSCH scheduling information, the UE may transmit an ACK for the DCI to the base station (similar to the DCI-based SPS release method).

Additionally, the UE may measure and report the optimal beam RS for each TRP. To this end, the base station may divide the beam measurement RS set/group into one or more subsets/sub-groups and configure them for the UE. The UE may select one or more RS(s) for each sub-set/sub-group, and report the selected RS to the base station along with its quality values (L1-RSRP, [L1-SINR]).

Operation of a terminal equipped with a plurality of panels

The operation of a UE with a plurality of panels in an improved wireless communication system has been defined/configured. In describing the present disclosure, 'Panel' may correspond to a set of antenna elements, a set of antenna ports, a set of RS/channel resources, a set of antenna/beam related resources related to a specific logical index., TCI state/spatial relation RS/QCL RS/pathloss set of RSs, a set of target channel/RS resources to which a specific beam/precoder related instruction is applied, etc.

Specifically, a panel entity may correspond to one or more RS resources (indexes). As an example, in the case of CSI/beam reporting, the one or more RS resources may be RSs related to measurement and/or reporting.

That is, the panel entity may correspond to the CSI-RS and/or SSB resource index reported in the beam reporting instance. The correspondence between the panel entity and the reported CSI-RS and/or SSB resource index may be known by the base station. And, the correspondence between the CSI-RS and/or SSB resource index and the panel entity may be determined by the UE.

The UE may report capability information related to the maximum number of SRS ports and coherence type for each panel entity to the base station. Multiple codebook-based SRS resource sets with different maximum numbers of SRS ports may be configured/supported for the UE. Here, the indicated SRI is based on SRS resources corresponding to one SRS resource set, and the SRS resource set may be aligned with the terminal capabilities for the panel entity.

As another example, the RS resource for beam indication may be a source RS for UL TX spatial filter information. The panel entity corresponding to one RS resource may be different and controlled by the terminal. Additionally, RS resources may be mapped to one or more panels, and one or more RS resources may correspond to one or more RS resource sets.

And, for measurement of DL and/or UL beams (e.g., DL measurement RS reception, SRS transmission, etc.), L panels among the P panels of available terminals may be activated. And, for UL transmission, one of the L activated terminal panels may be selected.

Here, the UE may report a supported UL rank list (i.e., number of UL transport layers), a list of the number of supported SRS antenna ports, and a list of coherence types indicating a subset of ports. The base station may establish an association between the UL rank index and the rank/number/coherence type of the SRS antenna port for the UE.

Additionally, for quick UL panel selection of the UE, Multiphase extraction (MPE) mitigation, TCI state updates, UE power saving, UL interference management, support for various settings across panels, UL M-TRP case may be assumed/applied.

For example, TCI state updates (based on MCE CE or/and DCI) may be used for panel selection of the UE. Here, the UE may report information about at least one panel (e.g., the state of the panel (e.g., inactive or not, whether the panel for DL/UL measurements is activated or not, whether the panel dedicated to DL/UL reception is activated, etc.)) provided in the UE. Additionally, linking/association between UE panels such as CSI-RS/SSB resources or resource sets, SRS resource sets and/or PUCCH resource groups, etc. may be supported.

And, the UE may report a list of terminal capability value sets (for UE panel activation and selection). Each UE capability value set may be configured with the maximum number of SRS ports supported. At least one capability value may be different for two different sets of UE capability values, but is not limited to this and may be the same. The UE capability value set may be common across all BWP/CCs in the same band, but is not limited to this.

The correspondence between each reported CSI-RS and/or SSB resource index and one of the UE capability value sets in the reported list is determined by the UE and may be notified to the base station in the beam report instance.

The index of the UE capability value set is reported along with the SSBRI/CRI and L1-RSRP/SINR pair (e.g., up to 4 pairs, with 7 bits of absolute value and 4 bits of differential) in the beam reporting UCI, and at least one of the two options below may be applied.

Option 1: The UE may report one index for all CRI/SSBRI reported in one beam report.

Option 2: The UE may report one index for each CRI/SSBRI reported in one beam report.

As described above, a UE capability value set index (hereinafter, C-ID) is defined, and the UE may report UE capability information including information indicating how many C-IDs it has to the base station. Here, the attribute included/corresponding to the C-ID may be the maximum number of SRS ports supported by the UE for each C-ID.

In describing the present disclosure, a capability value set index (C-ID) may also be expressed as an index (ID).

For example, assume that panel #0 (2 ports), panel #1 (2 ports), panel #2 (4 ports), and panel #3 (4 ports) are configured for a UE (having a total of 4 panels). Here, panel #0 and panel #1 may be mapped to C-ID #0, and panel #2 and panel #3 may be mapped to C-ID #1. The UE may report C-ID #0 along with information indicating that the maximum number of SRS ports supported is 2, and C-ID #1 along with information indicating that the maximum number of SRS ports supported is 4 to the base station.

That is, the UE may transmit the C-ID and related terminal capability information (e.g., maximum number of SRS ports) to the base station as a report on the panel type.

Additionally or alternatively, a C-ID may be assigned/corresponding to each panel having the same number of SRS ports.

For example, assume that C-ID #0 (port 2) is mapped to panel #0, C-ID #1 (2 ports) is mapped to panel #1, C-ID #2 (2 ports) is mapped to panel #2, and C-ID #3 (2 ports) is mapped for panel #3. Here, the UE may report four C-IDs (i.e., C-ID #0 to C-ID #3).

That is, the UE may transmit the C-ID and related terminal capability information (e.g., maximum number of SRS ports) to the base station as a report on the panel type.

Additionally or alternatively, the UE may include the C-ID reported as a UE capability in the beam report and report it (instantaneously/periodically) to the base station.

For convenience of description of the present disclosure, the above-described reporting method (e.g., C-ID reporting method) will be called 'panel-specific beam reporting'.

If panel-specific beam reporting and/or the BM procedure described above (e.g., beam reporting according to the BM procedure in basic/enhanced wireless communication systems) is established, the UE may report the index(s) of the RS (e.g., CRI or SSBRI) related to the best N base station Tx beams (regardless of the Rx panel) to the base station along with the reception quality value of the corresponding RS (e.g., L1-RSRP or/and L1-SINR).

Here, N is a value between 1 and 4 and may be configured by the base station. And, the index of the RS related to the best N base station Tx beams may mean the N RSs with the highest reception quality values among a plurality of RSs related to the base station Tx beams.

That is, the panel-specific beam reporting scheme may include reporting the L1-RSRP/L1-SINR(s) associated with the CRI/SSBRI(s) and the optimal C-ID (for each CRI/SSBRI). Here, a mode/method of individually reporting C-ID for each CRI/SSBRI and/or a mode/method of reporting a single C-ID for all CRI/SSBRI may be applied.

A terminal that activated (or, wants to activate or wants to use) a single panel (or a single panel type), or a terminal that wants to use a single C-ID may report the same C-ID or a single C-ID for all CRIs/SSBRIs. A terminal that activated (or, wants to activate or wants to use) a plurality of panels (or a plurality of panel types), or a terminal that wants to use a plurality of C-IDs may report a different C-ID for a plurality of (e.g., N) CRIs/SSBRIs.

For example, for N=4, a terminal may report C-ID#0 for first two CRIs and C-ID#1 for the remaining two CRIs. In this case, if a base station performs reception/transmission by using one of beams corresponding to first two CRIs, a terminal may report to a base station information showing that it prefers (or, is more advantageous) to perform transmission/reception by using a panel corresponding to C-ID#0 (or, one of panels corresponding to C-ID#0). Alternatively, if a base station performs reception/transmission by using one of beams corresponding to the remaining two CRIs, a terminal may report to a base station information showing that it prefers (or, is more advantageous) to perform transmission/reception by using a panel corresponding to C-ID#1 (or, one of panels corresponding to C-ID#1).

Based on panel-specific beam report as above, a base station may change/indicate the best DL beam (e.g., a DL TCI state) and/or the best UL beam (e.g., an UL TCI state, a spatial relation RS). Here, the number of UL ports and/or the maximum number of transmission layers supported for each C-ID or panel (or panel type) may be different, so it needs to change a configuration/an indication related to a PUSCH, and/or a configuration/an indication related to a (codebook-based (CB)/non-codebook-based (NCB)) SRS along with a beam change (or after a beam change). For this purpose, a variety of methods as below may be considered.

For example, when receiving C-ID change information (e.g., a change from 4 ports to 2 ports) from a terminal, a base station may configure/indicate a change in the number of ports by using the following method.

Method 1 - Within the same BWP, a plurality of SRS resources (or SRS resource sets) with different numbers of ports may be pre-configured through RRC, and a SRS resource corresponding to an activation panel of a terminal may be indicated through a SRI field or a SRS resource set selection field of PUSCH scheduling DCI.

Method 2 - SRS resources within the same BWP may have the same number of ports, and the number of ports may be changed through a RRC reconfiguration for SRS resources.

Method 3 - Within the same BWP, a plurality of SRS resources (or SRS resource sets) with different numbers of ports may be pre-configured through RRC, and some SRS resources (or SRS resources set)(s) (corresponding to a specific number of ports) may be activated through a MAC-CE.

Method 4 - SRS resources within the same BWP may have the same number of ports, SRS resources with different numbers of ports may be configured in a different UL BWP, and BWP switching corresponding to a C-ID change may be performed.

In the present disclosure, Method 2 and Method 4 are assumed in a relationship between the number of ports of a BWP and SRS resources, and a case is assumed that among them, Method 4 in which a panel/a panel type change through BWP switching is supported, compared to Method 2 in which a panel/panel type change is not supported during a RRC reconfiguration process.

In a description of the present disclosure, a specific index for a terminal may correspond to a terminal capability set, a C-ID, the maximum number of SRS ports, a panel, a panel type, etc. described above. In addition, a specific index may be related to at least one BWP. For example, a first specific index may be related to a first BWP, and a second specific index may be related to a second BWP and a third BWP. Configuration information about a relationship between a specific index and a BWP may or may not be provided to a terminal. In other words, a relationship between a specific index and a BWP may be determined and maintained/updated by a base station, and for a terminal, a specific index (related to an activated specific BWP) may be applied/activated at a corresponding time point through activation of a specific BWP among preconfigured BWPs.

As such, BWP activation/deactivation/switching may be applied to activate/deactivate/switch a specific index. In this case, a problem may occur in which a specific index is not activated properly in a BWP inactivity timer-based operation. First, a BWP inactivity timer-based operation is described in detail.

BWP Inactivity Timer-related Operation

A BWP inactivity timer may be defined/configured for fallback to a default BWP.

For example, in a BWP operation, a BWP index may be defined based on a parameter called BWP-Id. If a BWP index of a DL BWP is the same as a BWP index of an UL BWP, pairing (or link) for a corresponding DL BWP and UL BWP may be configured.

For a serving cell, a BWP index for a default DL BWP among DL BWPs configured for a terminal may be provided. If a default DL BWP is not provided to a terminal, an initial DL BWP may become a default DL BWP.

A BWP inactivity timer may be provided to a terminal for a serving cell. For each activated serving cell where a BWP inactivity timer is configured, a terminal's MAC entity may operate as follows:

- If a default DL BWP is configured, an activated DL BWP is not a default DL BWP (or if a default DL BWP is not configured, an activated DL BWP is not an initial DL BWP) and an activated DL BWP is not a dormant DL BWP:

    -- If a BWP inactivity timer associated with an active DL BWP expires:

        --- If a default DL BWP is configured, perform BWP switching to a default DL BWP (or to an initial DL BWP if a default DL BWP is not configured).

In this regard, configuration information (e.g., a servingcellconfig information element) for a serving cell provided through higher layer (e.g., RRC) signaling may be provided. Configuration information for a serving cell may include a parameter for a value of a BWP inactivity timer. A value of a BWP inactivity timer may be configured within a range between a minimum of 2ms and a maximum of 2560ms, but it is just an example and a higher or lower value may be configured.

As described above, if an activated BWP is not a default BWP (or an initial BWP), if there is no activity (e.g., DL/UL scheduling) in a corresponding BWP for a predetermined period of time (e.g., a BWP inactivity timer), an operation of fallback to a default BWP (or an initial BWP) is defined. This operation is mainly defined for a DL BWP, but if there is pairing or link between a DL BWP and an UL BWP, a DL BWP change and an UL BWP change may be applied together. Accordingly, in the following description, unless there is a risk of confusion, a DL BWP and an UL BWP are collectively referred to as a BWP.

BWP Switching-based Uplink Transmission or Reception

As described above, BWP activation/deactivation/switching may be applied for activation/deactivation/switching of a specific index of a terminal (e.g., corresponding to a terminal capability set, a C-ID, the maximum number of SRS ports, a panel, a panel type, etc.). If a BWP inactivity timer-based operation is applied, a problem with switching/fallback to a default/initial BWP associated with a specific index that is not appropriate for a terminal may occur.

For example, it is assumed that BWP#0 and BWP#1 are configured for a serving cell, 4 ports are configured as the number of CB SRS ports for BWP#0, and 2 ports are configured as the number of CB SRS ports for BWP#1. In addition, it is assumed that BWP#0 in which a 4-port CB SRS is configured is related to specific index #0 of a terminal (e.g., C-ID#0 corresponding to a terminal capability set in which the maximum number of SRS ports is 4), and BWP#1 in which a 2-port CB SRS is configured is related to a specific index of a terminal (e.g., C-ID#1 corresponding to a terminal capability set in which the maximum number of SRS ports is 2). It is assumed that a default (or initial) BWP is BWP#0, and a currently activated BWP is BWP#1. In this case, if a terminal wants to turn off a 4-port panel and operate as a 2-port panel, C-ID#1 may be reported to a base station through panel-specific beam report. In response thereto, a base station may indicate BWP switching through DCI to a corresponding terminal, and a terminal may change BWP#1 to an active BWP. Afterwards, if DL/UL traffic does not occur on BWP#1 and a BWP inactivity timer expires, a terminal must perform fallback to BWP#0. In other words, a problem may occur in which a terminal has to forcibly turn on an unwanted 4-port panel to perform transmission and reception.

A variety of examples of the present disclosure for solving this problem is described below.

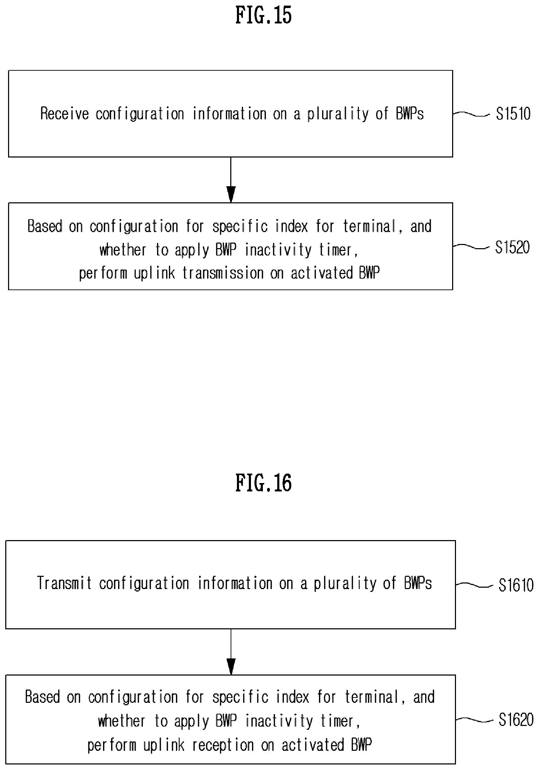

FIG. 15 is a flowchart for describing an example of an uplink transmission operation of a terminal according to the present disclosure.

In S1510, a terminal may receive configuration information on a plurality of BWPs from a network.

A plurality of BWPs may be related to a different specific index for a terminal. A plurality of BWPs may be related to different numbers of SRS ports.

In S1520, based on a configuration related to a specific index for a terminal, and whether a BWP inactivity timer is applied, a terminal may perform uplink transmission on an activated BWP.

Each specific index for a terminal may correspond to one terminal capability set including information related to the maximum number of SRS ports.

A configuration related to a specific index for a terminal may include a configuration of a plurality of BWPs related to a different specific index and/or different numbers of SRS ports for a terminal.

A configuration related to a specific index for a terminal may be provided to a terminal when information related to the number of specific indexes or the number of terminal capability sets is reported from a terminal to a network.

Based on a configuration related to a specific index for a terminal, one of at least one specific index or one of at least one terminal capability set may be reported from a terminal to a network. Here, one of at least one specific index or one of at least one terminal capability set may be included in report related to at least one of L1-RSRP or L1-SINR.

If a configuration related to a specific index for a terminal is provided to a terminal, a BWP inactivity timer may not be applied. If a BWP inactivity timer is not applied, it may include that a BWP inactivity timer is disabled, or a BWP inactivity timer is configured as a value higher than a predetermined threshold (e.g., a value greater than the maximum timer length supported by a terminal, or a value corresponding to infinity).

Additionally or alternatively to S1520, a BWP inactivity timer may be applied. A BWP inactivity timer may be configured as a value within a previously defined range, or may be configured as a value higher than a predetermined threshold. In this case, switching from an activated BWP to a specific BWP may be performed when a BWP inactivity timer expires. Here, a specific BWP may be a BWP related to the lowest specific index or the smallest number of SRS ports of a terminal. Alternatively, a specific index for a terminal related to a specific BWP may be requested/reported from a terminal to a network, and a specific BWP may be configured based on request/report from a terminal. For example, a specific BWP may correspond to a default BWP or an initial BWP.

FIG. 16 is a flowchart for describing an example of an uplink reception operation of a base station according to the present disclosure.

In S1610, a base station may transmit configuration information on a plurality of BWPs to a terminal.

A plurality of BWPs may be related to a different specific index for a terminal. A plurality of BWPs may be related to different numbers of SRS ports.

In S1620, based on a configuration related to a specific index for a terminal, and whether a BWP inactivity timer is applied, a base station may perform at least one of downlink transmission or uplink reception on an activated BWP.

A description of a specific index for a terminal, a configuration related thereto and non-application of a BWP inactivity timer is the same as a description in S1520 of FIG. 15, so an overlapping description is omitted.

Additionally or alternatively to S1620, a BWP inactivity timer may be applied. In this case, when a BWP inactivity timer expires, a base station may perform at least one of downlink transmission or uplink reception on a specific BWP by considering that switching from an activated BWP to a specific BWP was performed in a terminal. Here, a specific BWP may be a BWP related to the lowest specific index or the smallest number of SRS ports of a terminal. Alternatively, a specific index for a terminal related to a specific BWP may be requested/reported to a base station, and a base station may configure a specific BWP based on request/report from a terminal. For example, a specific BWP may correspond to a default BWP or an initial BWP.

Below, a variety of examples of the present disclosure are described in detail.

Embodiment 1

This embodiment relates to a method in which an operation of fallback to a timer-based default BWP is not applied for a terminal (or a cell, a CC, a band) that switching of a specific index (e.g., a panel, a panel type, a C-ID, etc.) for a terminal is configured based on BWP switching.

For example, if there is a configuration related to a specific index for a terminal (e.g., a specific BWP/CC-related configuration), a terminal may not expect that a BWP inactivity timer (e.g., bwp-InactivityTimer) is configured to a corresponding cell/CC/band. For example, for a case above, if a BWP inactivity timer is configured, a terminal may process it as an error case to prevent a BWP inactivity timer from being applied.

For example, a configuration related to a specific index for a terminal (or a configuration related to a specific BWP/CC) may include a case in which SRS resources with different numbers of (CB) SRS ports are configured for a different BWP in the same cell/CC/band.

Additionally or alternatively, a configuration related to a specific index for a terminal (or a configuration related to a specific BWP/CC) may include a case in which a different BWP in the same cell/CC/band is associated with a different C-ID.

Additionally or alternatively, a configuration related to a specific index for a terminal (or a configuration related to a specific BWP/CC) may include a case in which a characteristic related to a specific index for a terminal (e.g., a C-ID-related terminal capability report operation is configured, or it is configured to perform panel-specific beam report) is introduced/applied/configured for the specific BWP/CC.

If an operation of fallback to a timer-based default BWP is not applied, it may include that for example, a base station informs a terminal that a timer-based default BWP fallback operation is disabled in a corresponding cell/CC/band through an explicit indicator (e.g., a new RRC parameter). For example, a new RRC parameter may be defined as a new field showing whether to enable/disable a timer-based default BWP fallback operation. Alternatively, by providing a terminal with an information element in which a field indicating a value for a BWP inactivity timer is omitted, a base station may inform a terminal that a value for a BWP inactivity timer is released and a timer-based default BWP fallback operation is disabled.

Additionally or alternatively, if an operation of fallback to a timer-based default BWP is not applied, it may include that a value of a BWP inactivity timer is configured/indicated as a value higher than a predetermined threshold or a value of infinity. Accordingly, the occurrence probability of an event in which a BWP inactivity timer expires may be reduced or a corresponding event may be prevented from occurring. For example, if there is a configuration related to a specific index for a terminal (e.g., a configuration related to a specific BWP/CC), a terminal may expect that a BWP inactivity timer (e.g., bwp-InactivityTimer) is configured to exceed/to be equal to or greater than a predetermined threshold (or may not expect that it is configured to be less than or equal to/less than a predetermined threshold).

For example, an available range of an existing BWP inactivity timer (bwp-inactivitytimer) is 2ms to 2560ms, and in the present disclosure, a predetermined threshold may be defined as 2560ms. In other words, in order to not apply an operation of fallback to a timer-based default BWP according to the present disclosure, a value of a BWP inactivity timer may be configured/indicated as a value exceeding 2560ms or a value representing infinity.

Embodiment 2

This embodiment relates to a method for configuring a default BWP as a BWP related to a specific index for a terminal when a timer-based default BWP fallback operation is applied.

For example, a terminal may expect that a configuration (e.g., a SRS resource configuration) related to a specific index (e.g., a C-ID, a panel, a panel type) for a terminal corresponding to at least one smallest (CB) SRS port is configured by a base station for a default BWP. Alternatively, a terminal may expect that a configuration (e.g., a SRS resource configuration) related to a specific index (e.g., a C-ID, a panel, a panel type) for a terminal corresponding to a larger number of (CB) SRS ports is configured by a base station for a BWP other than a default BWP.

Embodiment 2 may be applied when a timer-based default BWP fallback operation is applied, but a default BWP is related to a higher specific index for a terminal (e.g., a panel related to a higher terminal capability (e.g., more CB SRS ports)), so it is used to prevent a problem that fallback to a default BWP increases battery consumption and complexity of a terminal. For this purpose, the lowest/lower specific index for a terminal (or a panel related to the lowest/lower terminal capability (e.g., the smallest number of/fewer CB SRS ports)) may be configured/defined to be related to a default BWP.

According to Embodiment 2, if a timer expires, a forced panel switching problem for a terminal may occur, but if there is no operation (e.g., DL/UL traffic) in an activated panel until a timer expires, a panel that is forcibly switched is configured as a panel with the lowest/lower terminal power consumption, so a benefit may be obtained in terms of terminal power consumption.

Embodiment 2 may be also applied together with Embodiment 1. For example, the probability of fallback to a default BWP (and forced switching to a specific panel accordingly) may be reduced by configuring a value of a BWP inactivity timer as a value higher than a predetermined threshold as in Embodiment 1. Despite lowering a probability, fallback to a default BWP may occur, and even so, according to Embodiment 2, a specific index for a terminal may be fallen back to a default BWP related to the lowest/lower index (e.g., a panel corresponding to the lowest/lower terminal capability), reducing unnecessary terminal power consumption.

Embodiment 3

In this embodiment, when a timer-based default BWP fallback operation is applied, a specific index for a terminal related to a default BWP may be requested/reported from a terminal. A network/a base station may configure a default BWP as a BWP related to a specific index for a terminal by considering request/report from a terminal.

For example, a specific index (e.g., a default C-ID) for a terminal that prefers or requests to be applied to a default BWP may be reported to a network. For example, a specific index for this terminal may be reported to a network when a terminal reports a C-ID-related terminal capability. Alternatively, a terminal may associate related information preferred/requested to be applied to a default BWP (e.g., the maximum number of SRS ports supported for a corresponding panel) to any one of a plurality of specific indexes (e.g., a specific index in predetermined order, e.g., C-ID#0) and report it as a terminal capability.

Additionally or alternatively, a specific index for a terminal may be reported in a form of RRC signaling/MAC-CE/UCI for more frequent updates compared to terminal capability reporting.

Similar to Embodiment 2, Embodiment 3 allows a default BWP to be related to a specific index for the lower/lowest terminal even if timer-based default BWP fallback occurs. Unlike Embodiment 2, in Embodiment 3, a terminal may recommend/derive a specific index for a terminal related to a default BWP. In other words, according to a terminal's preference, a terminal may report a specific panel (or a panel type) as a default panel (or a panel type) to be used in /related to a default BWP.

For example, a terminal that has a 1-port panel, a 2-port panel, and a 4-port panel informs a base station that it prefers to use a 2-port panel as a default panel, and a base station may consider a terminal's preference in configuring a panel related to a default BWP (a base station does not necessarily need to follow a terminal's preference).

In Embodiment 3, a base station may apply a related configuration (e.g., a SRS-related configuration for each BWP) more flexibly than Embodiment 2 by considering a terminal's request for a preferred fallback/default panel.

Embodiment 3 may be also applied together with Embodiment 1. For example, the probability of fallback to a default BWP (and forced switching to a specific panel accordingly) may be reduced by configuring a value of a BWP inactivity timer as a value higher than a predetermined threshold as in Embodiment 1. Despite lowering a probability, fallback to a default BWP may occur, and even so, it may be fallen back to a default BWP configured by considering a specific index for a terminal requested/reported by a terminal according to Embodiment 3.

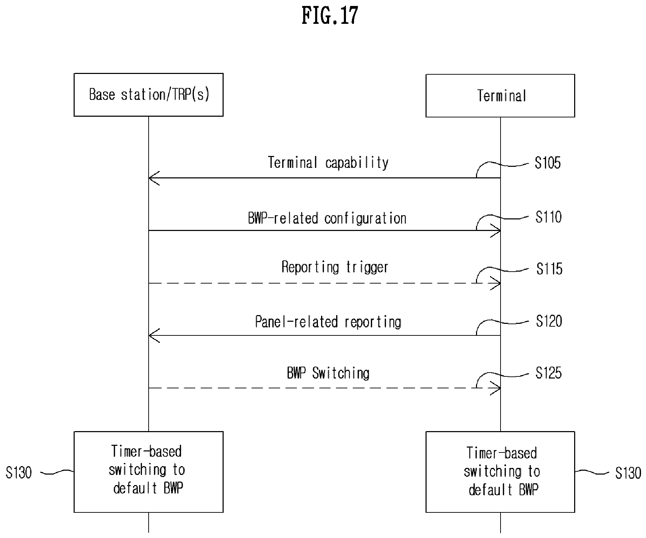

FIG. 17 is a diagram for describing an example of signaling between a terminal and a base station according to the present disclosure.

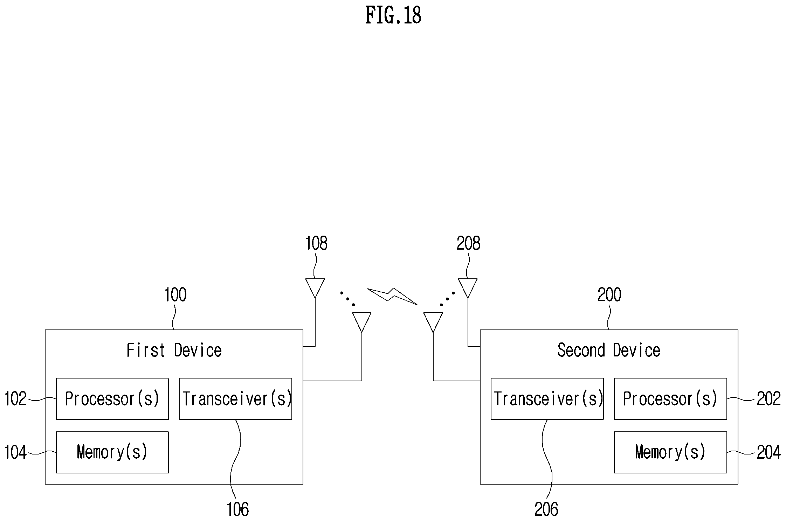

In an example of FIG. 17, a terminal/a base station are just an example, and may be applied by being replaced with various devices described by referring to FIG. 18. An example of FIG. 17 is just for convenience of a description, and does not limit the scope of the present disclosure. In addition, some step(s) shown in FIG. 17 may be omitted according to a situation and/or a configuration, etc.

In FIG. 17, it is assumed that a terminal and/or a base station supports a multi-panel and/or a multi-TRP. In addition, a TRP/a panel may be a unit configured with one or a plurality of antenna(s), antenna port(s), beam(s), or uplink/downlink RS/channel resource(s) of a terminal. As an example, an uplink transmission panel may be identified based on a source RS for an uplink channel/RS (e.g., an UL TCI state, spatial relation information). A downlink transmission TRP may be identified based on a source RS for a downlink channel/RS (e.g., a DL TCI state, a QCL RS). Specifically, a panel/a TRP may be identified based on a unit of a source RS for a specific UL/DL resource set/group, an identifier of a specific UL/DL resource set/group, a specific index/ID, a specific panel-related index/ID, etc. For example, a TRP may be classified according to information about a CORESET group (or a CORESET pool) (e.g., a CORESET index, an ID).

A terminal may report terminal capability information to a base station S105. Terminal capability information may include reporting information on specific index(es) (e.g., a C-ID) for a terminal described in examples described above. A corresponding terminal capability set may include information about the maximum number of SRS ports that may be supported. In addition, as described in Embodiment 3, information about a specific index (e.g., a default C-ID) requested/preferred to be applied to a default BWP may be reported in S105.

According to reported terminal capability information, a base station may transmit BWP-related configuration information to a terminal S110. For example, according to information on the maximum number of SRS ports that may be supported for a C-ID reported by a terminal, a base station may configure (the number of ports of) (CB) SRS resources for each BWP. In addition, configuration information related to beam and panel reporting may be also transmitted S110. This configuration information may include information on the number of CRI(s)/SSBRI(s) to be reported, a measurement value to be reported (e.g., whether to report L1-RSRP or L1-SINR), reporting type information (e.g., whether it is aperiodic reporting, semi-persistent reporting on a PUSCH, semi-persistent reporting on a PUCCH or periodic reporting), information regarding a reporting period and time point (e.g., a period, a slot offset, etc.), an indicator for whether to report by including a C-ID, etc.

In addition, a BWP-related configuration may include a configuration for a plurality of BWPs related to a specific index for a terminal (e.g., a C-ID, a panel, a panel type, a terminal capability set, etc.).

When semi-persistent or aperiodic reporting is configured, a base station may provide a terminal with an indication to trigger/activate reporting S115.

A terminal may periodically/aperiodically perform reporting related to a corresponding beam and panel according to a received configuration (and an indication for triggering/activation) S120. Corresponding reporting may include CRI(s)/SSBRI(s), L1-RSRP(s)/L1-SINR(s) and C-ID(s) (for each CRI/SSBRI).

A base station may transmit BWP switching indication information to a terminal according to beam and panel reporting information S125. It may be indicated only when BWP switching is required.

After a BWP is changed by a BWP switching indication, a BWP inactivity timer starts and runs. When a corresponding timer expires, fallback/switching to a default BWP may be performed S130. Here, if a configuration (e.g., a configuration of a plurality of BWPs related to a different specific index and/or different numbers of SRS ports for a terminal) related to a specific index for a terminal (e.g., a panel/a panel type/a terminal capability set/a C-ID) is provided to a terminal, it is possible to prevent fallback to a timer-based default BWP from being performed or to reduce a probability of a timer-based default BWP being performed according to Embodiment 1. Additionally or alternatively, even if fallback to a timer-based default BWP is performed according to Embodiment 2 or 3, a default BWP may be configured so that a specific index for a terminal related to a default BWP is associated with the lowest/lower terminal capability, or a default BWP may be configured based on a terminal's request/report therefor.

A base station/terminal signaling operation described above may be implemented by a device described in FIG. 18. For example, a base station (e.g., TRP 1/TRP 2) may correspond to a first device 100, and a terminal may correspond to a second device 200, and in some cases, the opposite case may be considered.

For example, a base station/terminal signaling operation may be processed by at least one processor (e.g., 102, 202) described in FIG. 18, and a base station/terminal signaling operation may be stored in a memory (e.g., 104, 204) in a form of a command (e.g., an executable code) for driving at least one processor (e.g., 102, 202) in FIG. 18.

General Device to which the Present Disclosure may be applied

FIG. 18 is a diagram which illustrates a block diagram of a wireless communication system according to an embodiment of the present disclosure.

In reference to FIG. 18, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.    A method performed by a terminal in a wireless communication system, the method comprising:

receiving, from a network, configuration information about a first bandwidth part (BWP) and a second BWP; and
based on a configuration related to a specific index for the terminal, and a BWP inactivity timer not being applied, performing an uplink transmission on an activated second BWP.

2.    The method of claim 1, wherein:
the configuration related to the specific index for the terminal includes a configuration of a plurality of BWPs related to a different specific index for the terminal.

3.    The method of claim 1, wherein:
each specific index for the terminal corresponds to one terminal capability set including information related to a maximum number of sounding reference signal (SRS) ports.

4.    The method of claim 1, wherein:
the configuration related to the specific index for the terminal includes a configuration of a plurality of BWPs related to a different number of SRS ports.

5.    The method of claim 1, wherein:
the configuration related to the specific index for the terminal is based on information related to a number of the specific indexes or a number of the terminal capability sets being reported to the network.

6.    The method of claim 1, wherein:
based on the configuration related to the specific index for the terminal, one of at least one specific index or one of at least one terminal capability set is reported to the network.

7. The method of claim 6, wherein:
the one of the at least one specific index or the one of the at least one terminal capability set is included in a report related to at least one of a L1(layer 1)-RSRP(reference signal received power) or a L1-SINR(signal to interference plus noise ratio).

8. The method of claim 1, wherein:
based on the configuration related to the specific index for the terminal being provided to the terminal, the BWP inactivity timer is not applied.

9. The method of claim 1, wherein:
when the BWP inactivity timer is not applied, it includes that the BWP inactivity timer is disabled, or the BWP inactivity timer is configured as a value higher than a predetermined threshold.

10. The method of claim 1, wherein:

based on the configuration related to the specific index for the terminal being provided to the terminal, and the BWP inactivity timer being applied,
when the BWP inactivity timer expires, a switching from the second BWP to the first BWP is performed.

11. The method of claim 10, wherein:

the first BWP is related to a lowest specific index or a smallest number of SRS ports, or
a specific index for a terminal related to the first BWP is requested or reported from the terminal to the network.

12. The method of claim 10, wherein:
the first BWP is a default BWP or an initial BWP.

13. The method of claim 10, wherein:
the BWP inactivity timer is configured as a value higher than a predetermined threshold.

14. A terminal in a wireless communication system, the terminal comprising:

at least one transceiver; and
at least one processor connected to the at least one transceiver,
wherein the at least one processor is configured to:

receive, through the at least one transceiver, from a network, configuration information about a first bandwidth part (BWP) and a second BWP; and
based on a configuration related to a specific index for the terminal, and a BWP inactivity timer not being applied, perform, through the at least one transceiver, an uplink transmission on an activated second BWP.

15. A method performed by a base station in a wireless communication system, the method comprising:

transmitting, to a terminal, configuration information about a first bandwidth part (BWP) and a second BWP; and
based on a configuration related to a specific index for the terminal, and a BWP inactivity timer not being applied, performing at least one of a downlink transmission or an uplink reception on an activated second BWP.

16. A base station in a wireless communication system, the base station comprising:

at least one transceiver; and
at least one processor connected to the at least one transceiver,
wherein the at least one processor is configured to:

transmit, through the at least one transceiver, to a terminal, configuration information about a first bandwidth part (BWP) and a second BWP; and
based on a configuration related to a specific index for the terminal, and a BWP inactivity timer not being applied, perform, through the at least one transceiver, an uplink reception on an activated second BWP.

17. A processing device configured to control a terminal in a wireless communication system, the processing device comprising:

at least one processor; and
at least one computer memory operatively coupled to the at least one processor, and storing instructions for performing a method according to any one of Claim 1 to Claim 13 based on being executed by the at least one processor.

18. At least one non-transitory computer readable medium storing at least one instruction, wherein: based on being executed by at least one processor, the least one instruction controls a device to perform a method according to any one of Claim 1 to Claim 13 in a wireless communication system.

19. A method performed by a terminal in a wireless communication system, the method comprising:

receiving, from a network, configuration information about a first bandwidth part (BWP) and a second BWP;
based on a configuration related to a specific index for the terminal, performing an uplink transmission on an activated second BWP; and
performing a switching from the second BWP to the first BWP when a BWP inactivity timer expires,
wherein the first BWP is related to a lowest specific index or a smallest number of SRS ports, or
wherein a specific index for a terminal related to the first BWP is requested or reported from the terminal to the network.

20. The method of Claim 19, wherein:
the first BWP is a default BWP or an initial BWP.

21. The method of Claim 19, wherein:
the BWP inactivity timer is configured as a value higher than a predetermined threshold.

22. A method performed by a base station in a wireless communication system, the method comprising:

transmitting, to a terminal, configuration information about a first bandwidth part (BWP) and a second BWP; and
based on a configuration related to a specific index for the terminal, performing at least one of a downlink transmission or an uplink reception on an activated second BWP; and
performing the at least one of the downlink transmission or the uplink reception on the first BWP when a BWP inactivity timer expires,
wherein the first BWP is related to a lowest specific index or a smallest number of SRS ports, or
wherein a specific index for a terminal related to the first BWP is requested or reported from the terminal to the network.

# FIG.1

# FIG.2

# FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

# FIG.5

Resource grid

A carrier
(up to 3300 subcarriers, i.e., 275 RBs)

A BWP

1 RB=12 subcarrier

1 RE

1 subcarrier

1 Symbol

l=0 ·····

k=0

# FIG.6

INITIAL CELL SEARCH

SYSTEM INFORMATION RECEPTION

RANDOM ACCESS PROCEDURE

GENERAL DL/UL Tx/Rx

PSS/SSS& [DLRS]& PBCH — S601

PDCCH/ PDSCH (BCCH) — S602

PRACH — S603

PDCCH/ PDSCH — S604

PUSCH — S605

PDCCH/ PDSCH — S606

PDCCH/ PDSCH — S607

PUSCH/ PUCCH — S608

· DL/UL ACK/NACK
· UE CQI/PMI RI REPORT
 USING PUSCH AND PUCCH

## FIG.7

## FIG.8

TERMINAL                                      BASE STATION

CSI-Resourceconfig IE          S410
(CSI-SSB-ResourceSetList)

S420
SSB resource

S430
Beam Reporting (best SSBRI and L1-RSRP)

# FIG.9

Repetition
"on"

(a)

Repetition
"off"

Resource #0
Resource #0
Resource #0

CRI feedback

(b)

# FIG.10

TERMINAL                                                    BASE STATION

S610
NZP CSI-RS resource set IE

Receiving CSI-RS resource(s) configured   S620
with Repetition 'ON' through same Tx beam

S630 —— Determine Rx beam

S640
Omit CSI report (No report)

FIG.11

TERMINAL                                    BASE STATION

S710

NZP CSI-RS resource set IE

Receiving CSI resource(s) configured with
Repetition 'OFF' through difrerent Tx beams

S720

S730 — Determine best beam

S470

CSI report (CRI/L1-RSRP)

FIG.12

FIG.13

Base station reception
beam sweeping

SRS#0 reception
SRS#1 reception
SRS#0 reception
. . .

SRS
#0.1....N

Terminal transmission
beam (fixing)

(a)

Base station reception
beam fixing

SRS#0 SRS#1

Terminal reception
beam sweeping

(b)

FIG.14

TERMINAL                                          BASE STATION

                    SRS Config. IE                    S1010
              (usage-BM, SRS-SpatialRelation Info)

S1020 — Determine Tx beam for
              SRS resource

                                                       S1030
        Transmitting SRS through determined Tx beam

                                                       S1040
                        feedback

# FIG.15

Receive configuration information on a plurality of BWPs — S1510

Based on configuration for specific index for terminal, and whether to apply BWP inactivity timer, perform uplink transmission on activated BWP — S1520

# FIG.16

Transmit configuration information on a plurality of BWPs — S1610

Based on configuration for specific index for terminal, and whether to apply BWP inactivity timer, perform uplink reception on activated BWP — S1620

# FIG.17

```
Base station/TRP(s)                              Terminal

                    Terminal capability                   ── S105
              ◄─────────────────────────────────┐

                  BWP-related configuration                ── S110
              ├─────────────────────────────────►

                    Reporting trigger                      ── S115
              ┆─────────────────────────────────►

                  Panel-related reporting                  ── S120
              ◄─────────────────────────────────┐

                      BWP Switching                        ── S125
              ┆─────────────────────────────────►

         ┌──────────────┐              ┌──────────────┐
 S130 ── │ Timer-based  │              │ Timer-based  │ ── S130
         │ switching to │              │ switching to │
         │ default BWP  │              │ default BWP  │
         └──────────────┘              └──────────────┘
```

EP 4 468 810 A1

FIG.18

<div align="center">

## INTERNATIONAL SEARCH REPORT

</div>

| | |
|---|---|
| | International application No. |
| | **PCT/KR2023/000819** |

**A. CLASSIFICATION OF SUBJECT MATTER**

**H04W 72/23**(2023.01)i; **H04W 72/21**(2023.01)i; **H04W 72/04**(2009.01)i; **H04B 7/06**(2006.01)i; **H04B 7/0413**(2017.01)i; **H04B 7/0404**(2017.01)i

According to International Patent Classification (IPC) or to both national classification and IPC

**B. FIELDS SEARCHED**

Minimum documentation searched (classification system followed by classification symbols)

H04W 72/23(2023.01); H04B 7/06(2006.01); H04L 12/24(2006.01); H04L 5/00(2006.01); H04W 24/10(2009.01); H04W 72/04(2009.01); H04W 76/27(2018.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 대역폭 부분(BWP), 스위칭(switching), 설정(configuration), 인덱스(index), 비활동 타이머(inactivity timer), 활성화(activation)

**C. DOCUMENTS CONSIDERED TO BE RELEVANT**

| Category* | Citation of document, with indication, where appropriate, of the relevant passages | Relevant to claim No. |
|---|---|---|
| X | US 2021-0167930 A1 (OFINNO, LLC) 03 June 2021 (2021-06-03)<br>See paragraphs [0261], [0389], [0407], [0418], [0471], [0478]-[0479] and [0494]; and figure 24. | 1-22 |
| A | NEC. Remaining issues for NR NTN. R1-2111180, 3GPP TSG RAN WG1 #107-e. 05 November 2021.<br>See sections 1-4. | 1-22 |
| A | KR 10-2343136 B1 (BEIJING XIAOMI MOBILE SOFTWARE CO., LTD.) 27 December 2021 (2021-12-27)<br>See paragraphs [0099]-[0385]; and figures 1-54. | 1-22 |
| A | US 2021-0266775 A1 (OFINNO, LLC) 26 August 2021 (2021-08-26)<br>See paragraphs [0216]-[0700]; and figures 1-58. | 1-22 |
| A | US 2021-0144062 A1 (SAMSUNG ELECTRONICS CO., LTD.) 13 May 2021 (2021-05-13)<br>See paragraphs [0053]-[0349]; and figures 1-28. | 1-22 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 May 2023** | **02 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<div align="center">

46

</div>

| International application No. |
| --- |
| **PCT/KR2023/000819** |

| Patent document cited in search report | | | Publication date (day/month/year) | Patent family member(s) | | | Publication date (day/month/year) |
| --- | --- | --- | --- | --- | --- | --- | --- |
| US | 2021-0167930 | A1 | 03 June 2021 | EP | 3568946 | A1 | 20 November 2019 |
| | | | | EP | 3611866 | A1 | 19 February 2020 |
| | | | | US | 11356229 | B2 | 07 June 2022 |
| | | | | US | 11405166 | B2 | 02 August 2022 |
| | | | | US | 2021-0336750 | A1 | 28 October 2021 |
| | | | | US | 2022-0294595 | A1 | 15 September 2022 |
| | | | | US | 2022-0368508 | A1 | 17 November 2022 |
| | | | | WO | 2019-084570 | A1 | 02 May 2019 |
| KR | 10-2343136 | B1 | 27 December 2021 | CN | 111742514 | A | 02 October 2020 |
| | | | | CN | 111742514 | B | 26 October 2021 |
| | | | | CN | 113708814 | A | 26 November 2021 |
| | | | | EP | 3563511 | A1 | 06 November 2019 |
| | | | | EP | 3563511 | B1 | 17 June 2020 |
| | | | | EP | 3723321 | A1 | 14 October 2020 |
| | | | | JP | 2021-503231 | A | 04 February 2021 |
| | | | | JP | 6901743 | B2 | 14 July 2021 |
| | | | | US | 10879985 | B2 | 29 December 2020 |
| | | | | US | 11190255 | B2 | 30 November 2021 |
| | | | | US | 2019-0149213 | A1 | 16 May 2019 |
| | | | | US | 2019-0149305 | A1 | 16 May 2019 |
| | | | | WO | 2019-099817 | A1 | 23 May 2019 |
| US | 2021-0266775 | A1 | 26 August 2021 | EP | 3586469 | A1 | 01 January 2020 |
| | | | | EP | 3586469 | B1 | 02 December 2020 |
| | | | | EP | 3866376 | A1 | 18 August 2021 |
| | | | | US | 11006305 | B2 | 11 May 2021 |
| | | | | US | 11019518 | B2 | 25 May 2021 |
| | | | | US | 2019-0215712 | A1 | 11 July 2019 |
| | | | | US | 2019-0215870 | A1 | 11 July 2019 |
| | | | | US | 2021-0282043 | A1 | 09 September 2021 |
| | | | | WO | 2019-139962 | A1 | 18 July 2019 |
| US | 2021-0144062 | A1 | 13 May 2021 | CN | 111373789 | A | 03 July 2020 |
| | | | | EP | 3677065 | A1 | 08 July 2020 |
| | | | | EP | 3677065 | B1 | 20 April 2022 |
| | | | | KR | 10-2019-0056074 | A | 24 May 2019 |
| | | | | KR | 10-2352684 | B1 | 18 January 2022 |
| | | | | US | 10897399 | B2 | 19 January 2021 |
| | | | | US | 11516085 | B2 | 29 November 2022 |
| | | | | US | 2019-0149421 | A1 | 16 May 2019 |
| | | | | WO | 2019-098750 | A1 | 23 May 2019 |

Form PCT/ISA/210 (patent family annex) (July 2022)